# EUROPÄISCHE PATENTSCHRIFT

(11) **EP 3 055 188 B1**
(45) Veröffentlichungstag und Bekanntmachung des Hinweises auf die Patenterteilung: **08.11.2017**
(21) Anmeldenummer: 14780758.0
(22) Anmeldetag: 26.09.2014
(51) Int. Cl.: B62D 5/083, B62D 6/10

(54) **LENKWELLE FÜR EINE KRAFTFAHRZEUGLENKUNG**
STEERING SHAFT FOR A MOTOR VEHICLE STEERING SYSTEM
ARBRE DE DIRECTION DESTINÉ À LA DIRECTION D'UN VÉHICULE AUTOMOBILE

(30) Priorität: 07.10.2013 DE 102013111082
(43) Veröffentlichungstag der Anmeldung: 17.08.2016
(73) Patentinhaber: ThyssenKrupp Presta AG, 9492 Eschen (LI); thyssenkrupp AG, 45143 Essen (DE)
(72) Erfinder: HEGEDÜS, Csaba, 3182 Karancslapujto (HU)
(74) Vertreter: thyssenkrupp Intellectual Property GmbH
(86) Internationale Anmeldenummer: PCT/EP2014/002611
(87) Internationale Veröffentlichungsnummer: WO 2015/051886

(56) Entgegenhaltungen:
- DE-A1- 19 856 251
- DE-A1- 19 935 283
- US-A- 4 285 266

## Beschreibung

### Technisches Gebiet

Die vorliegende Erfindung betrifft eine Lenkwelle für eine Kraftfahrzeuglenkung zur Verwendung mit einer Hilfskraftunterstützung, umfassend eine Eingangswelle und eine Ausgangswelle, welche zur Übertragung eines Drehmomentes mittels eines Drehstabes drehelastisch miteinander verbunden sind, bevorzugt zur Verwendung mit einer elektrischen Hilfskraftunterstützung.

### Stand der Technik

Im Bereich von Lenkwellen für Kraftfahrzeuglenkungen ist es bekannt, ein über eine Eingangswelle eingetragenes Drehmoment relativ zu einer Ausgangswelle zu bestimmen und auf dieser Grundlage mittels einer Hilfskraftunterstützung ein Hilfsdrehmoment zur Lenkunterstützung des Fahrers auf die Lenkwelle aufzubringen. Hierzu ist es bei hilfskraftunterstützten Fahrzeuglenkungen bekannt, die Lenkwelle des Kraftfahrzeuges in eine Eingangswelle und eine Ausgangswelle zu unterteilen, wobei die Eingangswelle üblicherweise mit dem Lenkrad des Kraftfahrzeuges verbunden ist, über welches ein Fahrer das entsprechende Lenkdrehmoment beziehungsweise den entsprechenden Lenkbefehl in die Eingangswelle einträgt. Die Ausgangswelle ist üblicherweise mit dem Lenkritzel verbunden, welches über eine entsprechende Zahnstange und Spurstangen die Lenkbewegung auf die gelenkten Räder des Kraftfahrzeugs überträgt.

Hilfskraftunterstützungen, beispielsweise elektrische Hilfskraftunterstützungen oder hydraulische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

Hierbei ist es bekannt, die Eingangswelle und die Ausgangswelle einer Lenkwelle mittels eines Drehstabes, welcher auch als Torsionsstab oder "*Torsion Bar*" bezeichnet wird, zu verbinden und über einen Drehmomentsensor das Eingangsdrehmoment aus dem relativen Verdrehwinkel zwischen der Eingangswelle und der Ausgangswelle zu bestimmen. Bei einer hydraulischen Servolenkung kann dies beispielsweise über ein Drehschieberventil stattfinden, bei einer elektrischen Servolenkung beispielsweise über entsprechende Magnetsensoren.

Die drehsichere Verbindung des Drehstabes mit der Eingangswelle und/oder der Ausgangswelle ist wichtig für das Funktionieren der entsprechenden drehelastischen Verbindung zwischen der Eingangswelle und der Ausgangswelle, welche schlussendlich das Abtasten des Drehmoments ermöglicht. Hierzu wird der Drehstab üblicher Weise mit der Eingangswelle und/oder der Ausgangswelle reibschlüssig verpresst.

Es ist bekannt, den Drehstab an der Eingangswelle und/oder der Ausgangswelle mittels eines Lagers abzustützen. Beispielsweise wird in der DE 10 2011 054 983 A1 vorgeschlagen, zwei direkt auf der Mantelfläche des Drehstabes wälzende Walzlager vorzusehen, welche eine Zentrierung und Führung des Drehstabes beim Verpressen ermöglichen.

Auch aus der DE 197 52 468 A1 ist es bekannt, einen Drehstab in einem Schaftabschnitt über ein Nadellager zu lagern.

Die DE 199 35 283 A1 zeigt ebenfalls eine Lenkwelle mit den eingangs genannten Merkmalen, bei welcher der Drehstab mittels eines Lagers an der Eingangswelle gelagert ist.

Weiterhin ist es in diesem Zusammenhang bekannt, sowohl Wälzlager als auch Gleitlager zu verwenden, um den Drehstab gegenüber der Eingangswelle und/oder der Ausgangswelle zu lagern. Durch die im Fahrbetrieb auf die Lenkwelle übertragenen Erschütterungen wird der in der Eingangswelle und der Ausgangswelle drehfest gehaltene Drehstab zu Schwingungen angeregt, da es sich bei dem auf diese Weise gehaltenen Drehstab um ein schwingungsfähiges System handelt. Der so angeregte Drehstab kann dabei im Lager anschlagen, unabhängig davon, ob es sich um ein Gleitlager oder ein Wälzlager handelt, so dass hier störende Klappergeräusche auftreten können.

### Darstellung der Erfindung

Ausgehend von dem bekannten Stand der Technik ist es eine Aufgabe der vorliegenden Erfindung, eine Lenkwelle anzugeben, welche ein verbessertes Schwingungsverhalten aufweist.

Diese Aufgabe wird durch eine Lenkwelle mit den Merkmalen des Anspruchs 1 gelöst. Vorteilhafte Weiterbildungen ergeben sich aus den Unteransprüchen.

Entsprechend wird eine Lenkwelle für ein Kraftfahrzeug zur Verwendung mit einer Hilfskraftunterstützung vorgeschlagen, umfassend eine Eingangswelle und eine Ausgangswelle, welche zur Übertragung eines Drehmoments mittels eines Drehstabes drehelastisch miteinander verbunden sind, wobei der Drehstab mittels eines Lagers an der Eingangswelle und/oder der Ausgangswelle gelagert ist. Erfindungsgemäß ist das Lager konisch ausgebildet.

Dadurch, dass das Lager konisch ausgebildet ist, können entsprechend durch Toleranzen bedingten Geräusche verringert beziehungsweise eliminiert werden und entsprechend das Schwingungsverhalten der gesamten Lenkwelle verbessert werden. Entsprechend kann auch der Geräuschbeitrag, welcher von der Lenkwelle stammt, reduziert oder vollständig eliminiert werden.

Durch die konische Ausbildung des Lagers kann das Lagerspiel durch ein entsprechendes Zusammenführen des Drehstabes in die Eingangswelle und/oder die Ausgangswelle eingestellt werden. Diese Einstellung des Lagerspiels ist aufgrund der konischen Ausbildung des Lagers unabhängig von den jeweiligen Toleranzen von Drehstab, Wälzkörpern, Eingangswelle und/oder Ausgangswelle, da über die Konizität eventuell vorhandene Toleranzen ausgeglichen werden können.

Bevorzugt umfasst das Lager einen konischen Lagerabschnitt auf dem Drehstab. In einer bevorzugten Weiterbildung umfasst das Lager einen konischen Lagerabschnitt der Eingangswelle und/oder der Ausgangswelle. Entsprechend kann hier ein Gleitlager so ausgebildet werden, dass der konische Lagerabschnitt des Drehstabes mit dem konischen Lagerabschnitt in der Eingangswelle und/oder Ausgangswelle korrespondierend ausgebildet ist und entsprechend ein Lager mit einem vorgegebenen Spiel dadurch ausgebildet wird, dass der Drehstab in die Eingangswelle und/oder die Ausgangswelle entsprechend so weit gegeneinander bewegt werden, dass über den konischen Verbindungsbereich entsprechend ein vorbestimmtes Lagerspiel erreicht wird.

Das Lager umfasst bevorzugt ein Wälzlager, besonders bevorzugt ein Nadellager, mit Wälzkörpern, wobei die Wälzkörper besonders bevorzugt durch einen elastischen Lagerkäfig gehalten sind. Durch die Verwendung eines Wälzlagers kann die Hysterese in der Lenkwelle gering gehalten werden.

Besonders bevorzugt können die Wälzkörper des Wälzlagers direkt auf einem Lagerabschnitt des Drehstabes und/oder direkt auf einem Lagerabschnitt der Eingangswelle und/oder der Ausgangswelle wälzen. So kann auf Lagerschalen verzichtet werden, wodurch Kosten gespart werden können und die Lenkwelle kompakt ausgebildet werden kann.

In einem bevorzugten Ausführungsbeispiel sind die Wälzkörper zylindrisch ausgebildet und sind zwischen einem konischen Lagerabschnitt auf dem Drehstab und einem konischen Lagerabschnitt in der Eingangswelle und/oder der Ausgangswelle aufgenommen. Die Konizitäten der konischen Lagerabschnitte sind dabei bevorzugt identisch. Durch die Verwendung von zylindrischen Wälzkörpern können mit einem einfachen Nadellager die vorteilhaften Wirkungen des konischen Lagers erreicht werden.

In einer Weiterbildung sind die Wälzkörper konisch ausgebildet und zwischen einem Lagerabschnitt auf dem Drehstab und einem Lagerabschnitt in der Eingangswelle und/oder der Ausgangswelle aufgenommen, wobei die Lagerabschnitte bevorzugt unterschiedliche Konizitäten aufweisen. Durch die Verwendung konischer Wälzkörper kann die Ausbildung der Lagerabschnitte vereinfacht werden. Insbesondere kann der Lagerabschnitt in der Eingangswelle und/oder der Ausgangswelle zylindrisch ausgebildet sein und nur der Lagerabschnitt auf dem Drehstab muss konisch ausgebildet sein. Bei einer konischen Ausbildung der Wälzkörper kann entweder der Lagerabschnitt auf dem Drehstab oder der Lagerabschnitt in der Eingangswelle und/oder der Ausgangswelle zylinderförmig beschaffen sein, und der jeweils andere Lagerabschnitt ist dann entsprechend dem Konus der konusförmigen Wälzkörper konusförmig ausgebildet. In einer weiteren Weiterbildung sind sowohl der Lagerabschnitt auf dem Drehstab als auch der Lagerabschnitt in der Eingangswelle und/oder Ausgangswelle konisch ausgebildet, und die Wälzkörper sind ebenfalls konisch ausgebildet, wobei der jeweilige Konus am Lagerabschnitt auf dem Drehstab und am Lagerabschnitt in der Eingangswelle und/oder Ausgangswelle entsprechend dem Konus der Wälzkörper angepasst ist.

Zur Ausbildung eines Wälzlagers können zwischen dem konischen Lagerabschnitt auf dem Drehstab und dem konischen Lagerabschnitt in der Eingangswelle und/oder Ausgangswelle entsprechende Wälzkörper vorliegen, welche auf den Lagerabschnitten wälzen. Bei einer Ausbildung der Konizität des am Drehstab vorgesehenen Lagerabschnittes und in der Eingangswelle und/oder Ausgangswelle vorgesehenen Lagerabschnittes derart, dass die beiden Konen gleich sind, können hier zylinderförmige Wälzkörper vorgesehen sein.

Die Wälzkörper sind bevorzugt über einen elastischen Lagerkäfig miteinander verbunden, so dass sie frei an den entsprechenden konischen Lagerabschnitt anpassbar sind. Auf diese Weise werden Toleranzen minimiert.

In einer Weiterbildung umfasst das Lager einen konischen Lagerabschnitt auf dem Drehstab und einen dazu komplementären Lagerabschnitt in der Eingangswelle und/oder in der Ausgangswelle, und die beiden konischen Lagerabschnitte bilden ein Gleitlager aus, wobei die Konizitäten der beiden konischen Lagerabschnitte bevorzugt identisch sind. So können die vorteilhaften Wirkungen des konischen Lagers auch bei einem Gleitlager erreicht werden. Insbesondere lässt sich das Gleitlager auf einfache Weise so einstellen, dass ein Klappern nicht vorkommt oder zumindest stark reduziert wird.

Bevorzugt werden die Eingangswelle und/oder die Ausgangswelle mit dem Drehstab drehfest verpresst. Hierbei wird bevorzugt zunächst eine erste drehfeste Verbindung zwischen dem Drehstab und beispielsweise der Eingangswelle so durchgeführt, dass die Eingangswelle den Drehstab in einer entsprechenden Bohrung aufnimmt, und in der Bohrung der Drehstab in einer entsprechenden Fügeaufnahme drehfest verpresst wird. Zwischen dem Drehstab und der Innenwand der Bohrung wird dann ein konisches Lager vorgesehen, welches einen entsprechenden konischen Lagerabschnitt auf dem Drehstab und/oder einen konischen Lagerabschnitt in der Eingangswelle umfasst.

In einer ersten Variante werden die beiden konischen Lagerabschnitte so während des Verpressens miteinander in Gegenüberstellung gebracht, dass ein entsprechendes Gleitlager mit einem vorgegebenen Spiel ausgebildet wird. Durch Einpressen kann eine entsprechend exakte Positionierung erreicht werden. In einer Alternative werden zwischen dem Drehstab und der Eingangswelle Wälzkörper vorgesehen, welche jeweils auf dem Material des Drehstabes beziehungsweise dem Material der Eingangswelle im Bereich der jeweiligen Lagerabschnitte wälzen. Durch ein entsprechend tiefes Einpressen des Drehstabes in de Eingangswelle kann so das Spiel des Lagers den Vorgaben gemäß eingestellt werden.

Die Steigung des Konus ist dabei bevorzugt so gewählt, dass er in Einpressrichtung verjüngend ausgebildet ist, um beim Einpressen des Drehstabes in die Eingangswelle entsprechend die jeweiligen Lagerabschnitte so in Gegenüberstellung zu bringen, dass ein vorgegebenes Spiel erreicht wird. Diese Ausbildung hat weiterhin den Vorteil, dass die Wälzkörper zwischen der Eingangswelle und dem Drehstab gehalten werden, derart, dass sie im weiteren Montageprozess nicht herausfallen. Dies vereinfacht die weitere Montage der Lenkwelle dahingehend, dass beim nachfolgenden Fügen des Drehstabes mit der Ausgangswelle eine beliebige Positionierung der beiden miteinander zu fügenden Teile vorgenommen werden kann, ohne dass auf ein Herausfallen der Wälzkörper geachtet werden müsste.

Bevorzugt ist auch die Ausbildung der Lenkwelle gemäß einem der vorstehenden Ausführungsvarianten, bei der die Eingangswelle und/oder die Ausgangswelle mit dem Drehstab drehfest verpresst ist. Besonders bevorzugt erfolgt die Verbindung ausschliesslich durch Verpressen und es wird dabei auf eine zusätzliche Sicherung, beispielsweise durch Splint oder Stift oder Verklebung verzichtet.

Die oben gestellte Aufgabe wird auch durch ein Verfahren mit den Merkmalen des Anspruchs 10 gelöst.

Entsprechend wird ein Verfahren zur Herstellung einer Lenkwelle vorgeschlagen, wobei die Lenkwelle eine Eingangswelle und eine Ausgangswelle umfasst, welche zur Übertragung eines Drehmoments mittels eines Drehstabes drehelastisch miteinander verbunden werden, wobei der Drehstab mittels eines Lagers an der Eingangswelle und/oder der Ausgangswelle gelagert wird. Erfindungsgemäß wird ein konisches Lager auf dem Drehstab vorgesehen und der Drehstab wird mit der Eingangswelle und/oder der Ausgangswelle drehfest derart verpresst, dass das Spiel des Lagers durch das Verpressen eingestellt wird, bevorzugt spielfrei eingestellt wird.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine Explosionsdarstellung einer bekannten Lenkwelle für eine Kraftfahrzeuglenkung;
- Figur 2: eine schematische perspektivische Darstellung der Lenkwelle aus Figur 1 in einem Vormontagezustand;
- Figur 3: eine Schnittansicht durch die Lenkwelle gemäß Figuren 1 und 2 im montierten Zustand;
- Figur 4: eine schematische perspektivische Darstellung eines Abschnitts eines Drehstabes sowie eines Lagers gemäß einem Ausführungsbeispiel der vorliegenden Erfindung;
- Figur 5: eine schematische perspektivische Ansicht einer Lenkwelle gemäß einem weiteren Ausführungsbeispiel der vorliegenden Erfindung in einem Vormontagezustand;
- Figur 6: eine schematische Seitenansicht eines Abschnitts des Drehstabes und der Eingangswelle aus der Figur 5;
- Figur 7: eine schematische Seitenansicht eines Drehstabes und eines Lagers in einem weiteren Ausführungsbeispiel; und
- Figur 8: eine schematische Schnittansicht durch einen Lagerbereich eines Drehstabs in einer Lenkwelle.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

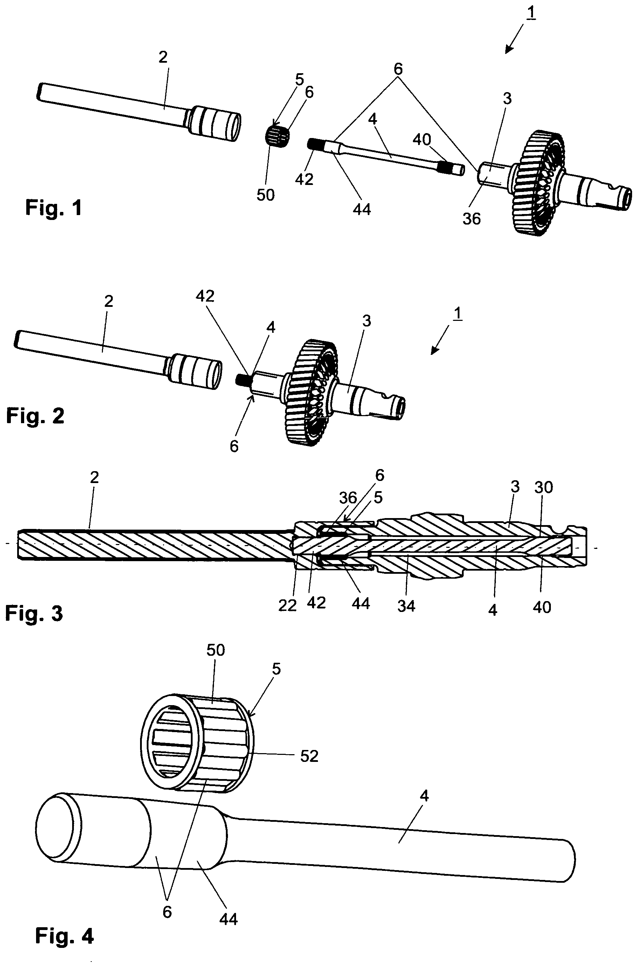

In den Figuren 1 bis 3 ist schematisch eine Lenkwelle 1 gemäß einem aus dem Stand der Technik bekannten Ausführungsbeispiel gezeigt. Die Lenkwelle 1 umfasst eine Eingangswelle 2, eine Ausgangswelle 3 und einen die Eingangswelle 2 und die Ausgangswelle 3 drehelastisch miteinander verbindenden Drehstab 4.

Der Drehstab 4 weist an seinem einen Ende einen ersten Fügeabschnitt 40 auf, welcher mit einer entsprechenden, dazu komplementären Fügeaufnahme 30 in der Ausgangswelle 3 gefügt wird, beispielsweise durch Verpressen. Der Drehstab 4 weist weiterhin einen zweiten Fügeabschnitt 42 auf, welcher mit einer entsprechenden, dazu komplementären Fügeaufnahme 22 in der Eingangswelle 2 gefügt wird, beispielsweise ebenfalls durch Verpressen.

Wie sich beispielsweise aus Figur 3 ergibt, in welcher eine schematische Schnittdarstellung durch die bekannte Lenkwelle 1 der Figuren 1 und 2 im montierten Zustand gezeigt ist, ist der Fügeabschnitt 40 mit der Ausgangswelle 3 in einem entsprechend komplementären Fügeabschnitt 30 der Ausgangswelle 3 drehfest verpresst. Der Drehstab 4 ist dabei zu großen Teilen in einer sich in Achsenrichtung der Ausgangswelle 3 erstreckenden Bohrung 34 in der Ausgangswelle 3 aufgenommen. Der Drehstab 4 ist lediglich im Bereich seines Fügeabschnitts 40 drehfest mit der Ausgangswelle 3 verpresst. Im Bereich des Fügeabschnittes 42 des Drehstabes 4 ist der Drehstab 4 mit einer Fügeaufnahme 22 der Eingangswelle 2 drehfest verpresst. Der übrige Bereich des Drehstabs 4 kann relativ zu der Ausgangswelle 3 rotiert beziehungsweise tordiert werden.

Das aus der Bohrung 34 in der Ausgangswelle 3 noch herausstehende Ende des Drehstabes 4, welches unter anderem den Fügeabschnitt 42 zum Fügen mit der Fügeaufnahme 22 in der Eingangswelle 2 umfasst, ist in der Ausgangswelle 3 mittels eines Lagers 6 gelagert. Das Lager 6 umfasst in dem gezeigten Ausführungsbeispiel in bekannter Weise ein Wälzlager 5, einen auf dem Drehstab 4 angeordneten zylindrischen Lagerabschnitt 44 und einen in der Ausgangswelle 3 angeordneten zylindrischen Lagerabschnitt 36, wobei die Wälzkörper 50 des Wälzlagers 5 zwischen den beiden Lagerabschnitten 36 und 44 angeordnet sind und auf diesen abwälzen. Entsprechend wird der Drehstab 4 durch das Lager 6 in radialer Richtung geführt, eine Torsion des Drehstabes 4 relativ zu der Ausgangswelle 3 kann jedoch einfach stattfinden.

Das Lager 6 kann entweder als Gleitlager oder - wie gezeigt - als Wälzlager 5 ausgebildet sein. In dem in den Figuren 1 bis 3 gezeigten Ausführungsbeispiel ist das Lager 6 in Form eines Nadellagers ausgebildet, bei welchem die einzelnen Wälzkörper 50 zylindrisch ausgeführt sind. Das Lager 6 ist daher zwischen einem zylindrisch ausgebildeten Lagerabschnitt 44 des Drehstabes 4 und einem komplementär dazu positionierten, ebenfalls zylindrischen Lagerabschnitt 36 der Ausgangswelle 3 angeordnet. Die Wälzkörper 50 des Lagers 6 wälzen dabei direkt auf der Oberfläche des Drehstabes 4 im Bereich des Lagerabschnittes 44 sowie direkt auf der Oberfläche der Ausgangswelle 3 im Bereich des Lagerabschnittes 36. Mit anderen Worten sind keine Lagerschalen vorhanden.

Durch das Bereitstellen des gezeigten Lagers 6 in Form eines Wälzlagers 5 kann ein vorteilhafter Effekt bezüglich der Hysterese des Drehstabes erreicht werden, da der Übergang zwischen Gleitreibung und Haftreibung relativ gering ist. Die Bereitstellung eines in entsprechender Form ausgebildeten Gleitlagers, bei welchem dann ein zylindrischer Lagerabschnitt 44 des Drehstabs 4 in einem zylindrischen Lagerabschnitt 36 der Eingangswelle 2 und/oder der Ausgangswelle 3 geführt ist, ist ebenfalls bekannt, aber wegen der erhöhten Haftreibung und der damit einhergehenden Hysterese des Drehstabs nicht bevorzugt.

In Figur 2 ist die bekannte Lenkwelle 1 noch einmal in einem vormontierten Zustand gezeigt, in welchem der Drehstab 4 bereits in der in Figur 3 zu erkennenden Bohrung 34 der Ausgangswelle 3 eingeführt ist, derart, dass nur noch der Fügeabschnitt 42 aus der Ausgangswelle 3 herausschaut. Die Eingangswelle 2 ist entsprechend noch nicht in der in Figur 3 gezeigten Weise mit der Ausgangswelle 3 verbunden. Das Lager 6 ist aber bereits eingeführt.

Durch das Auftreten von Toleranzen kann die Lenkwelle 1 gemäß dem in den Figuren 1 bis 3 gezeigten, bekannten Ausführungsbeispiel jedoch dazu neigen, unerwünschte Geräusche von sich zu geben. Hierbei ist zu berücksichtigen, dass der Drehstab 4, welcher nur im Bereich seiner Fügeabschnitte 40, 42 eingespannt ist und durch das Lager 6 radial geführt wird, beim Auftreten von Toleranzen im Lager 6 Klappergeräusche erzeugen kann, wenn der Drehstab 4 beispielsweise durch Fahreinflüsse zu Schwingungen angeregt wird. Die Toleranzen im Lager 6 können dabei entweder durch abweichende Durchmesser der Wälzkörper 50, abweichende Außendurchmesser des Lagerabschnittes 44 des Drehstabes 4 oder abweichende Innendurchmesser des Lagerabschnittes 36 der Ausgangswelle 3, oder eine Kombination dieser drei, auftreten.

Dieses Auftreten unerwünschter Geräusche kann dadurch reduziert oder verhindert werden, dass, wie beispielsweise in Figur 4 in einem ersten Ausführungsbeispiel gezeigt, das Lager 6 konisch ausgebildet ist. Hierzu ist in dem in Figur 4 gezeigten Ausführungsbeispiel der Lagerabschnitt 44 auf dem Drehstab 4 konisch ausgebildet. Das Lager 6 umfasst auch ein Wälzlager 5, welches als Nadellager ausgebildet ist, und bei welchem die Wälzkörper 50 im Wesentlichen zylindrisch ausgebildet sind. Die Wälzkörper 50 sind in einem elastischen Lagerkäfig 52 so gehalten, dass bei einem Aufschieben beziehungsweise Aufpressen des Wälzlagers 5 auf den konischen Lagerabschnitt 44 des Drehstabes 4 entsprechend ein Anliegen der Wälzkörper 50 an den Lagerabschnitt 44 erreicht wird. Nach dem Aufschieben beziehungsweise Aufpressen des Wälzlagers 5 auf den konischen Lagerabschnitt 44 sind die Drehachsen der Wälzkörper 50 entsprechend nicht mehr parallel zueinander ausgerichtet, sondern sie folgen der Konizität des konischen Lagerabschnitts 44.

Ein dazu komplementärer Lagerabschnitt 36, beispielsweise in der Eingangswelle 3, wie beispielsweise in Figur 3 gezeigt, weist dann bevorzugt die gleiche Konizität auf, wie der Lagerabschnitt 44. Um die Wälzkörper 50 aufnehmen zu können, ist der Lagerabschnitt 36 in der Ausgangswelle 3 aber um den durch die Wälzkörper 50 vorgegebenen erweiterten Durchmesser erweitert.

Mit anderen Worten kann der Drehstab 4, so wie beispielsweise in Figur 3 gezeigt, in die Ausgangswelle 2 eingeschoben werden und das Wälzlager 5 kann ebenfalls auf dem Lagerabschnitt 44 aufliegend aufgeschoben werden, wobei die Wälzkörper 50 dann zwischen dem konischen Lagerabschnitt 44 des Drehstabes 4 und einem dazu komplementären konischen Lagerabschnitt 36 der Ausgangswelle 3 angeordnet sind. Durch eine entsprechende die Steuerung des Vorgangs des Einpressens des Drehstabes 4 in die entsprechende Fügeaufnahme in der Ausgangswelle 3 kann aufgrund der konischen Ausbildung des Lagers 6 das Spiel im Lager 6 eingestellt werden. Beispielsweise kann hier mit einer vorbestimmten Einpresskraft der Drehstab 4 so in die Ausgangswelle 3 eingepresst werden, dass ein spielfreies Lager 6 erreicht wird.

Auf diese Weise kann ein Klappern reduziert beziehungsweise vollständig eliminiert werden, da im Bereich des Lagers 6 kein - oder nur ein marginales - Spiel vorliegt.

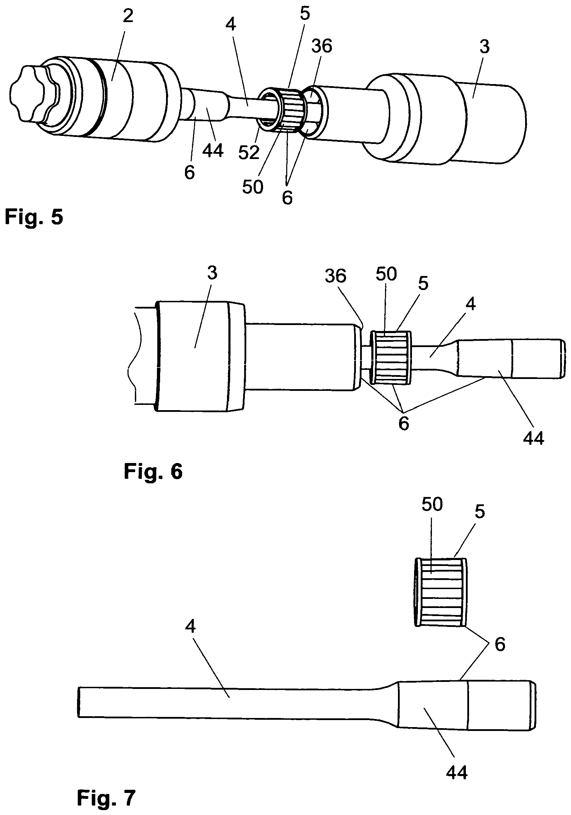

In Figur 5 ist der Drehstab 4 aus der Figur 4 noch einmal in einem Zustand gezeigt, in welchem er bereits mit einer Ausgangswelle 3 verpresst ist. Der konische Lagerabschnitt 44 ist klar zu erkennen, ebenso das Wälzlager 5, welches wiederum in Form eines Nadellagers so ausgebildet ist, dass die Wälzkörper 50 im Wesentlichen zylindrisch ausgebildet sind und in einem elastischen Lagerkäfig 52 gehalten sind. Auch der Lagerabschnitt 36 an der Ausgangswelle 3 ist konisch ausgebildet, derart, dass die Wälzkörper 50 zwischen dem konischen Lagerabschnitt 44 des Drehstabes 4 und dem konischen Lagerabschnitt 36 der Ausgangswelle 3 gehalten sind. Durch ein entsprechend tiefes Einpressen des Drehstabes 4 in die Ausgangswelle 3 kann das Spiel des Lagers 6 justiert beziehungsweise angepasst werden. Beispielsweise kann durch das Vorgeben einer mindestens zu erreichenden Einpresskraft das Lagerspiel auf einfache Weise und unabhängig von den vorliegenden Toleranzen der Wälzkörper 50 beziehungsweise der Toleranzen in der Bearbeitung der Lagerabschnitte 36, 44 vollständig eliminiert werden. Entsprechend können die Herstellungskosten hier auch verringert werden, da die Herstellung des Lagers 6 auch mit größeren Toleranzen möglich ist.

In der Eingangswelle 2, in welcher der Drehstab 4 in dem gezeigten Ausführungsbeispiel gehalten ist, kann entsprechend durch einfaches Zusammenpressen mit der Ausgangswelle 3 ein zuverlässiges Verpressen der Fügeabschnitte des Drehstabes 4 so erreicht werden, dass eine drehfeste Verbindung zwischen Eingangswelle 2, Drehstab 4 und Ausgangswelle 3 erreicht werden kann. Zum anderen wird aber gleichzeitig beim Verpressen für einen spielfreien Sitz der Wälzkörper 50 des Lagers 6 gesorgt, so dass unerwünschte Geräusche nicht oder nur sehr reduziert auftreten.

In Figur 6 ist die in Figur 5 gezeigte Situation noch einmal in einer schematischen Seitenansicht dargestellt, wobei das Lager 6 mit seinen Wälzkörpern 50 gezeigt ist. Das Lager 6 kann mit dem Lagerabschnitt 44 des Drehstabes 4 sowie einem in Figur 6 nicht direkt zu erkennenden Lagerabschnitt 36 der Ausgangswelle 3 durch Verpressen beziehungsweise Einführen des Drehstabes 4 in die Ausgangswelle 3 verbunden werden.

In Figur 7 ist in einem alternativen Ausführungsbeispiel ein Drehstab 4 gezeigt, welcher wiederum einen konischen Lagerabschnitt 44 aufweist. Das Lager 6 weist hier jedoch Wälzkörper 50 auf, welche konisch ausgebildet sind. Die Konizität der Wälzkörper 50 kann dabei so beschaffen sein, dass sie zur Konizität des Lagerabschnittes 44 entgegengesetzt sind und die Konizität entsprechend ausgeglichen wird. Mit anderen Worten ist die Mantelfläche über alle Wälzkörper 50, wenn das Wälzlager 5 auf dem Lagerabschnitt 44 aufgebracht ist, als zylindrisch zu betrachten. Entsprechend kann ein die Wälzkörper 50 aufnehmender, gegenüberliegender Lagerabschnitt 36, beispielsweise in der Ausgangswelle 3, ebenfalls zylindrisch ausgebildet sein. Auf diese Weise kann durch das Einpressen des Drehstabes 4 beispielsweise in die Ausgangswelle 3 durch die konische Ausbildung des Lagers 6 zum einen ein spielfreies Einstellen des Lagers 6 erreicht werden, zum anderen kann jedoch zumindest einer der Lagerabschnitte, nämlich der Lagerabschnitt, welcher in der Ausgangswelle 3 vorgesehen ist, zylindrisch gebohrt werden, wodurch die Herstellung weiter vereinfacht wird.

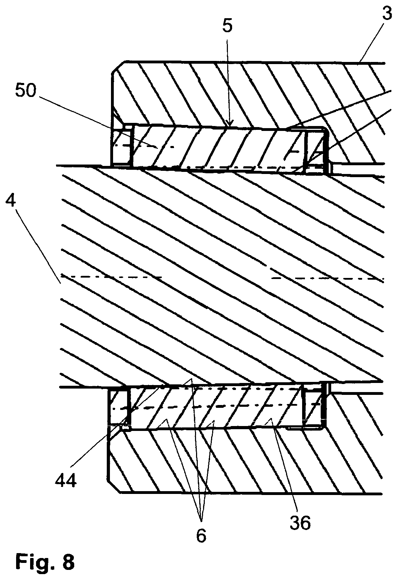

In Figur 8 ist in einer schematischen Schnittdarstellung eine Ausgangswelle 3 gezeigt, in welcher ein Drehstab 4 eingeführt ist, und in welchem ein Lager 6 mit Wälzkörpern 50 vorgesehen ist, um den Drehstab 4 gegenüber der Ausgangswelle 3 drehbar abzustützen. Die Wälzkörper 50 sind in Form eines Nadellagers ausgebildet und sind jeweils zylindrisch. Die zylindrischen Wälzkörper 50 wälzen zum einen auf einem konischen Lagerabschnitt 44 des Drehstabes 4 und zum anderen auf einem konischen Lagerabschnitt 36 der Ausgangswelle 3. Lagerschalen sind in dem gezeigten Ausführungsbeispiel nicht vorhanden, sondern die Wälzkörper 50 wälzen direkt auf dem Material der Ausgangswelle 3 beziehungsweise des Drehstabes 4 ab.

Die Konizität des Lagerabschnittes 44 und die Konizität des dazu komplementären Lagerabschnittes 36 sind gleich, so dass beim Einpressen des Drehstabes 4 in die Ausgangswelle 3 automatisch ein Verpressen der Wälzkörper 50 des Lagers 6 stattfindet. Entsprechend ist der Bereich des geringeren Durchmessers des konischen Lagerabschnitts 44 des Drehstabes 4 an dem Ende des Drehstabs 4 angeordnet, welches in Einpressrichtung Drehstabes 4 zeigt.

Auf diese Weise wird nach dem Einpressen des Drehstabes 4 in die Ausgangswelle 3 das Wälzlager 5 fest zwischen der Ausgangswelle 3 und dem Drehstab 4 gehalten, derart, dass die einzelnen Wälzkörper 50 zum einen im Wesentlichen spielfrei angeordnet sind, und zum anderen aufgrund der konischen Lagerabschnitte 36, 44 auch formschlüssig so gehemmt sind, dass sie nicht herausfallen können. Auf diese Weise lässt sich ein nachfolgendes Zusammenbauen, beispielsweise ein Verpressen mit einer Eingangswelle, deutlich vereinfachen, da es lageunabhängig durchgeführt werden kann.

Entsprechend wird durch die Bereitstellung der konischen Lagerung und insbesondere eines konischen Lagerabschnittes 44 des Drehstabes 4 beziehungsweise eines konischen Lagerabschnittes 36 der Ausgangswelle 3 zumindest erreicht, dass das Lager 6 im Wesentlichen spielfrei eingebaut werden kann, und zum anderen die Wälzkörper fest gehalten werden können.

In einer nicht gezeigten Alternative ist anstelle des Wälzlagers 5 ein Gleitlager vorgesehen, wobei dann der konische Lagerabschnitt 44 des Drehstabes 4 an dem konischen Lagerabschnitt 36 der Ausgangswelle 3 gleitend anliegt.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenkwelle
- 2: Eingangswelle
- 22: Fügeaufnahme
- 3: Ausgangswelle
- 30: Fügeaufnahme
- 34: Bohrung
- 36: Lagerabschnitt
- 4: Drehstab
- 40: erster Fügeabschnitt
- 42: zweiter Fügeabschnitt
- 44: Lagerabschnitt
- 5: Wälzlager
- 50: Wälzkörper
- 52: Lagerkäfig
- 6: Lager

## Patentansprüche

1. Lenkwelle (1) für ein Kraftfahrzeug zur Verwendung mit einer Hilfskraftunterstützung, umfassend eine Eingangswelle (2) und eine Ausgangswelle (3), welche zur Übertragung eines Drehmoments mittels eines Drehstabes (4) drehelastisch miteinander verbunden sind, wobei der Drehstab (4) mittels eines Lagers (6) an der Eingangswelle (2) und/oder der Ausgangswelle (3) gelagert ist,
**dadurch gekennzeichnet, dass**
das Lager (6) konisch ausgebildet ist.

2. Lenkwelle (1) gemäß Anspruch 1, **dadurch gekennzeichnet, dass** das Lager (6) einen konischen Lagerabschnitt (44) auf dem Drehstab (4) umfasst.

3. Lenkwelle (1) gemäß Anspruch 1 oder 2, **dadurch gekennzeichnet, dass** das Lager (6) einen konischen Lagerabschnitt (36) in der Eingangswelle (2) und/oder Ausgangswelle (3) umfasst.

4. Lenkwelle (1) gemäß einem der vorstehenden Ansprüche, **dadurch gekennzeichnet, dass** das Lager (6) ein Wälzlager (5), bevorzugt ein Nadellager, mit Wälzkörpern (50) umfasst, wobei die Wälzkörper (50) bevorzugt durch einen elastischen Lagerkäfig (52) gehalten sind.

5. Lenkwelle (1) gemäß Anspruch 4, **dadurch gekennzeichnet, dass** die Wälzkörper (50) direkt auf einem Lagerabschnitt (44) des Drehstabes (4) und/oder direkt auf einem Lagerabschnitt (36) der Eingangswelle (2) und/oder der Ausgangswelle (3) wälzen.

6. Lenkwelle (1) gemäß Anspruch 4 oder 5, **dadurch gekennzeichnet, dass** die Wälzkörper (50) zylindrisch ausgebildet sind und zwischen einem konischen Lagerabschnitt (44) auf dem Drehstab (4) und einem konischen Lagerabschnitt (36) in der Eingangswelle (2) und/oder der Ausgangswelle (3) aufgenommen sind, wobei die Konizitäten der konischen Lagerabschnitte (36, 44) bevorzugt identisch sind.

7. Lenkwelle (1) gemäß Anspruch 4 oder 5, **dadurch gekennzeichnet, dass** die Wälzkörper (50) konisch ausgebildet sind und zwischen einem Lagerabschnitt (44) auf dem Drehstab (4) und einem Lagerabschnitt (36) in der Eingangswelle (2) und/oder der Ausgangswelle (3) aufgenommen sind, wobei die Lagerabschnitte (36, 44) bevorzugt unterschiedliche Konizitäten aufweisen.

8. Lenkwelle (1) gemäß Anspruch 7, **dadurch gekennzeichnet, dass** der Lagerabschnitt (36) in der Eingangswelle (2) und/oder der Ausgangswelle (3) zylindrisch ausgebildet ist und der Lagerabschnitt (44) auf dem Drehstab (4) konisch ausgebildet ist.

9. Lenkwelle (1) gemäß einem der Ansprüche 1 bis 3, **dadurch gekennzeichnet, dass** das Lager (6) einen konischen Lagerabschnitt (44) auf dem Drehstab (4) und einen dazu komplementären Lagerabschnitt (36) in der Eingangswelle (2) und/oder in der Ausgangswelle (3) umfasst, und die beiden konischen Lagerabschnitte (36, 44) ein Gleitlager ausbilden, wobei die Konizitäten der beiden konischen Lagerabschnitte (36, 44) bevorzug identisch sind.

10. Verfahren zur Herstellung einer Lenkwelle (1) gemäß einem der vorstehenden Ansprüche, umfassend eine Eingangswelle (2) und eine Ausgangswelle (3), welche zur Übertragung eines Drehmoments mittels eines Drehstabes (4) drehelastisch miteinander verbunden werden, wobei der Drehstab (4) mittels eines Lagers (6) an der Eingangswelle (2) und/oder der Ausgangswelle (3) gelagert wird,
**dadurch gekennzeichnet, dass**
ein konisches Lager (6) auf dem Drehstab (4) vorgesehen wird und der Drehstab (4) mit der Eingangswelle (3) und/oder der Ausgangswelle (2) drehfest derart verpresst wird, dass das Spiel des Lagers (6) durch das Verpressen eingestellt wird, bevorzugt spielfrei eingestellt wird.

## Claims

1. Steering shaft (1) for a motor vehicle for use with a power assistance system, comprising an input shaft (2) and an output shaft (3) which are connected to one another in a rotationally elastic manner by means of a torsion bar (4) for the transmission of a torque, the torsion bar (4) being mounted by means of a bearing (6) on the input shaft (2) and/or the output shaft (3), **characterized in that** the bearing (6) is of conical configuration.

2. Steering shaft (1) according to Claim 1, **characterized in that** the bearing (6) comprises a conical bearing section (44) on the torsion bar (4).

3. Steering shaft (1) according to Claim 1 or 2, **characterized in that** the bearing (6) comprises a conical bearing section (36) in the input shaft (2) and/or output shaft (3).

4. Steering shaft (1) according to one of the preceding claims, **characterized in that** the bearing (6) comprises an anti-friction bearing (5), preferably a needle bearing, with rolling bodies (50), the rolling bodies (50) preferably being held by way of an elastic bearing cage (52).

5. Steering shaft (1) according to Claim 4, **characterized in that** the rolling bodies (50) roll directly on a bearing section (44) of the torsion bar (4) and/or directly on a bearing section (36) of the input shaft (2) and/or the output shaft (3).

6. Steering shaft (1) according to Claim 4 or 5, **characterized in that** the rolling bodies (50) are of cylindrical configuration and are received between a conical bearing section (44) on the torsion bar (4) and a conical bearing section (36) in the input shaft (2) and/or the output shaft (3), the conicities of the conical bearing sections (36, 44) preferably being identical.

7. Steering shaft (1) according to Claim 4 or 5, **characterized in that** the rolling bodies (50) are of conical configuration and are received between a bearing section (44) on the torsion bar (4) and a bearing section (36) in the input shaft (2) and/or the output shaft (3), the bearing sections (36, 44) preferably having different conicities.

8. Steering shaft (1) according to Claim 7, **characterized in that** the bearing section (36) in the input shaft (2) and/or the output shaft (3) is of cylindrical configuration, and the bearing section (44) on the torsion bar (4) is of conical configuration.

9. Steering shaft (1) according to one of Claims 1 to 3, **characterized in that** the bearing (6) comprises a conical bearing section (44) on the torsion bar (4) and a bearing section (36) which is complementary with respect thereto in the input shaft (2) and/or in the output shaft (3), and the two conical bearing sections (36, 44) configure a plain bearing, the conicities of the two conical bearing sections (36, 44) preferably being identical.

10. Method for producing a steering shaft (1) according to one of the preceding claims, comprising an input shaft (2) and an output shaft (3) which are connected to one another in a rotationally elastic manner by means of a torsion bar (4) for the transmission of a torque, the torsion bar (4) being mounted by means of a bearing (6) on the input shaft (2) and/or the output shaft (3), **characterized in that** a conical bearing (6) is provided on the torsion bar (4), and the torsion bar (4) is pressed fixedly to the input shaft (3) and/or the output shaft (2) so as to rotate with them/it, in such a way that the play of the bearing (6) is set by way of the pressing operation, preferably is set without play.

## Revendications

1. Arbre de direction (1) pour véhicule automobile, destiné à être utilisé avec le soutien d'une force auxiliaire et comprenant un arbre d'entrée (2) et un arbre de sortie (3) reliés l'un à l'autre de manière élastique en rotation au moyen d'un barreau rotatif (4) servant à transmettre un couple de rotation,
le barreau de rotation (4) étant monté sur l'arbre d'entrée (2) et/ou sur l'arbre de sortie (3) au moyen d'un palier (6),
**caractérisé en ce que**
le palier (6) a une forme conique.

2. Arbre de direction (1) selon la revendication 1, **caractérisé en ce que** les paliers (6) comportent une section conique (44) de palier sur le barreau de rotation (4).

3. Arbre de direction (1) selon les revendications 1 ou 2, **caractérisé en ce que** les paliers (6) comportent une section conique (36) de palier dans l'arbre d'entrée (2) et/ou dans l'arbre de sortie (3).

4. Arbre de direction (1) selon l'une des revendications précédentes, **caractérisé en ce que** les paliers (6) comportent un palier de roulement (5), de préférence un palier à aiguilles, présentant des corps de roulement (50), les corps de roulement (50) étant maintenus de préférence par une cage élastique de palier (52).

5. Arbre de direction (1) selon la revendication 4, **caractérisé en ce que** les corps de roulement (50) roulent directement sur une section de palier (44) du barreau de rotation (4) et/ou directement sur une section de palier (36) de l'arbre d'entrée (2) et/ou de l'arbre de sortie (3).

6. Arbre de direction (1) selon les revendications 4 ou 5, **caractérisé en ce que** les corps de roulement (50) ont une forme cylindrique et sont repris entre une section conique de palier (44) prévue sur le barreau de rotation (4) et sur une section conique de palier (36) prévue dans l'arbre d'entrée (2) et/ou l'arbre de sortie (3), les conicités des sections coniques de palier (36, 44) étant de préférence identiques.

7. Arbre de direction (1) selon les revendications 4 ou 5, **caractérisé en ce que** les corps de roulement (50) sont coniques et sont repris entre une section conique de palier (44) prévue sur le barreau de rotation (4) et sur une section conique de palier (36) prévue dans l'arbre d'entrée (2) et/ou l'arbre de sortie (3), les sections de palier (36, 44) présentant de préférence des conicités différentes.

8. Arbre de direction (1) selon la revendication 7, **caractérisé en ce que** la section de palier (36) prévue dans l'arbre d'entrée (2) et/ou l'arbre de sortie (3) a une forme cylindrique et la section de palier (44) prévue sur le barreau de rotation (4) est conique.

9. Arbre de direction (1) selon les revendications 1 à 3, **caractérisé en ce que** le palier (6) comporte une section conique de palier (44) sur le barreau de rotation (4) et une section de palier (36) complémentaire prévue dans l'arbre d'entrée (2) et/ou l'arbre de sortie (3), les deux sections coniques de palier (36, 44) formant un palier de coulissement et les conicités des deux sections coniques de palier (36, 44) étant de préférence identiques.

10. Procédé de fabrication d'un arbre de direction (1) selon l'une des revendications précédentes, comprenant un arbre d'entrée (2) et un arbre de sortie (3) reliés l'un à l'autre de manière élastique en rotation au moyen d'un barreau rotatif (4) servant à transmettre un couple de rotation, le barreau de rotation (4) étant monté sur l'arbre d'entrée (2) et/ou sur l'arbre de sortie (3) au moyen d'un palier (6),
**caractérisé en ce que**
un palier conique (6) est prévu sur le barreau de rotation (4) et le barreau de rotation (4) est comprimé à rotation solidaire sur l'arbre d'entrée (3) et/ou l'arbre de sortie (2) de telle sorte que le jeu du palier (6) soit ajusté par la compression, et est de préférence ajusté de manière à ne pas présenter de jeu.
